(19) Europäisches Patentamt / European Patent Office / Office européen des brevets

(11) **EP 2 755 330 B1**

(12) **FASCICULE DE BREVET EUROPEEN**

(45) Date de publication et mention
de la délivrance du brevet:
**23.12.2015 Bulletin 2015/52**

(51) Int Cl.:
*H04B 1/69* *(2011.01)*     *H04B 1/7183* *(2011.01)*
*H04B 1/7163* *(2011.01)*     *H04B 17/00* *(2015.01)*

(21) Numéro de dépôt: **14152722.6**

(22) Date de dépôt: **27.01.2014**

(54) **Méthode de détermination du temps d'arrivée d'une impulsion UWB au moyen d'un récepteur à double quadrature**

Bestimmungsmethode der Übertragungszeit eines Ultrabreitband(UWB)-Impulses eines Doppelquadraturempfängers

Method for determining the time of arrival of a UWB pulse using a double-quadrature receiver

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.01.2013 FR 1350298**

(43) Date de publication de la demande:
**16.07.2014 Bulletin 2014/29**

(73) Titulaire: **Commissariat à l'Énergie Atomique et aux Énergies Alternatives 75015 Paris (FR)**

(72) Inventeur: **Morche, Dominique 38240 Meylan (FR)**

(74) Mandataire: **Augarde, Eric et al Brevalex 56 Boulevard de l'Embouchure, Bât. B B.P. 27519 31075 Toulouse Cedex 2 (FR)**

(56) Documents cités:
**US-B1- 7 227 346**

• BAUTISTA F ET AL: "Low power beamforming RF architecture enabling fine ranging and AOA techniques", ULTRA-WIDEBAND (ICUWB), 2011 IEEE INTERNATIONAL CONFERENCE ON, IEEE, 14 septembre 2011 (2011-09-14), pages 585-589, XP032115737, DOI: 10.1109/ICUWB. 2011.6058914 ISBN: 978-1-4577-1763-5

**Description**

**DOMAINE TECHNIQUE**

La présente invention concerne le domaine des récepteurs UWB (*Ultra Wide Band*). Elle concerne les systèmes de mesure de distance utilisant un signal UWB mais aussi les systèmes de télécommunication UWB, notamment ceux qui utilisent une modulation par position d'impulsion (*PPM modulation*).

**ÉTAT DE LA TECHNIQUE ANTÉRIEURE**

Les systèmes de télécommunication ultra-large bande ou UWB de type impulsionnel sont bien connus de l'état de la technique. Dans un tel système, un symbole émis par un émetteur est transmis à l'aide d'une séquence d'impulsions ultra-courtes, de l'ordre de la nanoseconde ou de la centaine de picosecondes.

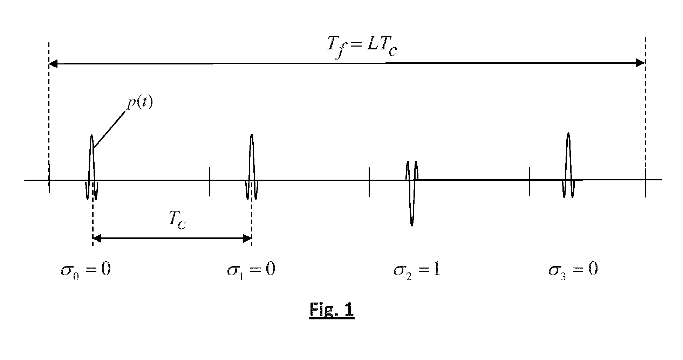

La Figure 1 illustre schématiquement le signal émis par un émetteur UWB, correspondant à un symbole d'information donné. Ce signal est généralement constitué d'impulsions se répétant avec une période de répétition $T_c$.

Le signal émis par l'émetteur, en absence de modulation par des symboles de modulation, peut s'exprimer sous la forme suivante :

$$s_{Tx}(t) = \sum_{k=0}^{L-1} (-1)^{\sigma_k} \, p(t - kT_c)\cos\left(2\pi f_0\left(t - kT_c\right) + \varphi_0\right) \tag{1}$$

où $p(t)$ est la forme de l'impulsion élémentaire en bande de base, $f_0$ est la fréquence porteuse, $\varphi_0$, la phase à l'origine, et $T_c$ est la période de répétition, et $\sigma = \sigma_0,...,\sigma_{L-1}$ est une séquence binaire pseudo-aléatoire. La durée $\tau$ de l'impulsion élémentaire $p(t)$ est nettement inférieure à la durée de la période $T_c$.

Ce signal de base peut être modulé en amplitude et/ou en position pour transmettre un symbole de modulation par trame constituée par un nombre donné de périodes de répétition. La trame est de durée $T_f = LT_c$ où $L$ est le nombre de périodes dans la trame. Par exemple si la modulation est une modulation de position (PPM pour *Pulse Position Modulation*), le signal modulé peut s'exprimer sous la forme :

$$s_{Tx}(t) = \sum_{k=0}^{L-1} (-1)^{\sigma_k} \, p(t - kT_c - m\varepsilon)\cos\left(2\pi f_0\left(t - kT_c - m\varepsilon\right) + \varphi_0\right) \tag{2}$$

où $\varepsilon$ est un retard de modulation sensiblement inférieur à la période $T_c$ et $m = 0,..., M-1$ donne la valeur du symbole PPM, autrement dit sa position temporelle. L'alphabet de modulation PPM est ici constitué par $\delta(t - m\varepsilon)$, avec $m = 0,.., M-1$ où $\delta$ est le symbole de Dirac.

Le récepteur d'un signal UWB modulé par modulation PPM doit déterminer précisément le temps d'arrivée de chaque impulsion reçue, puisque celui-ci est porteur de l'information de modulation.

Par ailleurs, la très faible durée d'impulsion des signaux UWB impulsionnels en fait d'excellents candidats pour la mesure de distance et la radiolocalisation. Quel que soit le principe du système de mesure de distance (temps de propagation aller retour par exemple) ou de radiolocalisation envisagé (différence de temps de propagation par exemple), il est indispensable de pouvoir déterminer précisément le temps d'arrivée d'une impulsion UWB.

Une première méthode de détermination du temps d'arrivée d'une impulsion UWB consiste à effectuer une intégration du signal reçu, après translation en bande de base, dans une pluralité de fenêtres temporelles consécutives.

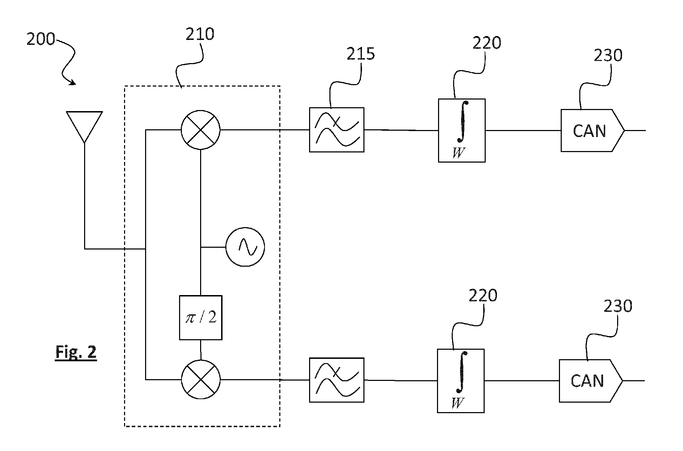

La Fig. 2 décrit un récepteur UWB, 200, utilisé par cette méthode de détermination de temps d'arrivée.

Il comprend un étage de conversion de fréquence pour translater le signal en bande de base, 210, , suivi, pour chacune des voies I et Q, d'un étage de filtrage passe-bas 215 et d'un intégrateur dans une fenêtre temporelle, 220 (ou dans une pluralité de fenêtres temporelles distribuées selon les positions temporelles relatives des impulsions attendues). Les fenêtres temporelles se succèdent à une fréquence F, et les résultats d'intégration sur les deux voies font l'objet d'une conversion analogique-numérique dans l'étage de conversion 230.

Toutefois, cette architecture ne permet pas de déterminer le temps d'arrivée de l'impulsion à l'intérieur de la fenêtre d'intégration, la mesure du temps d'arrivée n'est donc pas très précise.

La demande de brevet EP-A-1580901 propose une méthode de détection du temps d'arrivée d'une impulsion à l'intérieur d'une fenêtre temporelle.

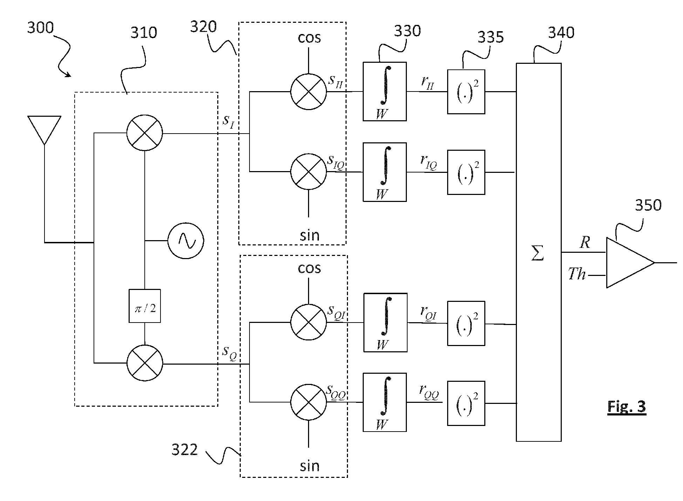

Le principe de cette méthode est illustré en Fig. 3. Elle utilise un récepteur UWB, 300, comprenant un premier étage de translation de fréquence pour ramener le signal en bande de base, 310, d'un étage de filtrage passe-bande ou passe-bas (non représenté) suivi, pour chacune des voies I et Q, d'un étage de corrélation avec deux sinusoïdes basse fréquence en quadrature. Plus précisément, le mélangeur en quadrature 320 effectue une projection du signal en phase, noté $S_I$, sur une base constituée de deux sinusoïdes orthogonales basse fréquence. De manière similaire, le mélangeur en quadrature 322 effectue une projection du signal en quadrature, noté $S_Q$, sur cette même base. Chaque mélangeur en quadrature comprend un premier mélangeur élémentaire avec un premier signal de la base (ici un signal cosinusoïdal) et un second mélangeur élémentaire avec un second signal de la base (ici un signal sinusoïdal), orthogonal au premier. Les signaux obtenus par projection, notés $S_{II}, S_{IQ}$ pour la voie I et $S_{QI}, S_{QQ}$ pour la voie Q, sont intégrés à l'intérieur d'une fenêtre temporelle de détection, au moyen des intégrateurs 330. Le cas échéant, les résultats d'intégration sont accumulés sur une pluralité de fenêtres temporelles, séparées par la période de répétition du signal UWB ou bien décalées selon un code de sauts temporels. Les signaux intégrés sont sommés quadratiquement en 335, 340 et la somme ainsi obtenue est comparée à une valeur de seuil en 350. Si la somme obtenue excède la valeur de seuil, le récepteur conclut qu'une impulsion a été reçue dans la fenêtre temporelle. L'architecture du récepteur UWB 300 est dite à double quadrature.

Le récepteur UWB à double quadrature permet de localiser une impulsion UWB dans la fenêtre temporelle de détection.

L'article de G. Masson et al. intitulé « A 1 nJ/b 3.2 to 4.7 GHz UWB 50 Mpulses/s double quadrature receiver for communication and localization » publié dans Proc. of the ESSCIRC 2010, 14-16 Sept. 2010, pp. 502-505, décrit une réalisation d'un récepteur à double quadrature et mentionne la possibilité d'utiliser une base orthogonale constituée de sinusoïdes orthogonales basse fréquence pour déduire le temps d'arrivée (ToA) d'une impulsion UWB dans une fenêtre temporelle de détection.

Plus précisément, on peut montrer, qu'après translation en bande de base par le premier étage, la corrélation de l'impulsion UWB avec les deux sinusoïdes orthogonales précitées, de fréquence $f_{LO2} = 1/\Delta T$, sur une fenêtre d'intégration de largeur égale à une période $\Delta T$, sont respectivement proportionnels à $\cos\left(2\pi\dfrac{\tau}{\Delta T}\right)$ et $\sin\left(2\pi\dfrac{\tau}{\Delta T}\right)$ où $\tau$ est le temps d'arrivée de l'impulsion.

La précision avec laquelle le détecteur peut mesurer le temps d'arrivée dépend notamment de la fréquence $f_{LO2}$. Cette fréquence étant choisie relativement faible pour ne pas avoir une fenêtre d'intégration trop courte (qui risquerait de ne pas contenir l'impulsion), la mesure de temps d'arrivée peut présenter une précision insuffisante. L'augmentation de la fréquence $f_{LO2}$ conduirait par ailleurs à prendre en considération un grand nombre d"échantillons.

En outre la précision de mesure de temps d'arrivée est affectée par les déséquilibres (de phase et de gain) intervenant à chaque étage de mélange en quadrature.

Enfin, le bruit de réception, notamment au niveau du second étage, limite la précision que l'on peut atteindre avec le récepteur à double quadrature précité.

L'article de F. Bautista et al. intitulé "Low power beamforming RF architecture enabling fine ranging and AOA techniques" publié dans Proc. of 2011 IEEE Int'l Conf. on Ultra-Wideband, pp. 585-589 décrit l'architecture d'un récepteur UWB à double quadrature permettant de mesurer le temps d'arrivée d'une impulsion UWB dans une fenêtre temporelle de détection.

Le brevet US-B-7227346 décrit l'architecture d'un détecteur numérique de phase à double quadrature.

Le but de la présente invention est par conséquent de proposer une méthode de détermination du temps d'arrivée d'une impulsion UWB qui permette d'obtenir une meilleure précision de mesure sans toutefois requérir une architecture de détecteur plus complexe.

## EXPOSÉ DE L'INVENTION

La présente invention est définie par une méthode d'estimation de temps d'arrivée d'une impulsion UWB comprise dans un signal RF, ladite impulsion UWB étant modulée à une fréquence porteuse, la méthode comprenant les étapes suivantes :

(a) réception du signal RF et translation du signal ainsi reçu en bande de base au moyen d'un premier mélange en quadrature pour fournir un signal en phase et un signal en quadrature avec le signal d'un premier oscillateur local, lesdits signaux en phase et en quadrature formant un signal en bande de base ;

(b) projection du signal en phase sur une base constituée par un premier et un second signaux périodiques, orthogonaux entre eux, pour fournir respectivement un premier et un second signaux de projection, ladite projection étant réalisée au moyen d'un second mélange en quadrature et d'une intégration sur une fenêtre temporelle ;

(c) projection du signal en quadrature sur ladite base, pour fournir respectivement un troisième et un quatrième signaux de projection, ladite projection étant réalisée au moyen d'un troisième mélange en quadrature et d'une intégration sur ladite fenêtre temporelle ;

(d) une estimation de la phase du signal RF par rapport au signal du premier oscillateur local ainsi qu'une estimation de la phase du signal en bande de base par rapport au premier/second signal périodique, à partir des premier, second, troisième et quatrième signaux de projection, le temps d'arrivée de ladite impulsion étant obtenu à partir des deux phases ainsi estimées.

Avantageusement, le temps d'arrivée est obtenu grâce à :

- une première estimation du temps d'arrivée à partir de la phase du signal en bande de base ainsi estimée ;
- une seconde estimation du temps d'arrivée à partir de la phase du signal RF ainsi estimée, cette seconde estimation étant obtenue avec une ambigüité égale à un multiple entier près de la demi-période de la fréquence porteuse ;
- une comparaison des première et seconde estimations du temps d'arrivée pour obtenir une estimation du temps d'arrivée, dépourvue d'ambigüité, sur la base de ladite seconde estimation.

Selon une première variante, la phase du signal RF est estimée à partir de :

$$\hat{\varphi}_{RF} = Arc\tan\sqrt{\frac{s_{QI}^2 + s_{QQ}^2}{s_{IQ}^2 + s_{II}^2}}$$

où $S_{II}, S_{IQ}, S_{QI}, S_{QQ}$ sont respectivement les premier, second, troisième et quatrième signaux de projection.

Selon une seconde variante, la phase du signal RF est estimée à partir de :

$$\hat{\varphi}_{RF} = \pi/2 - Arc\tan\sqrt{\frac{s_{IQ}^2 + s_{II}^2}{s_{QI}^2 + s_{QQ}^2}}$$

où $S_{II}, S_{IQ}, S_{QI}, S_{QQ}$ sont respectivement les premier, second, troisième et quatrième signaux de projection.

La phase du signal en bande de base est avantageusement estimée au moyen d'un premier estimateur :

$$\hat{\varphi}_{BB}^{3\&5} = \cos^2\left(\hat{\varphi}_{RF}\right) Arc\tan\left(\frac{s_{IQ}}{s_{II}}\right) + \sin^2\left(\hat{\varphi}_{RF}\right) Arc\tan\left(\frac{s_{QQ}}{s_{QI}}\right)$$

si elle est proche de 0 (modulo $\pi$) ou bien au moyen d'un second estimateur :

$$\hat{\varphi}_{BB}^{4\&6} = \pi/2 - \cos^2\left(\hat{\varphi}_{RF}\right) . Arc\tan\left(\frac{s_{II}}{s_{IQ}}\right) - \sin^2\left(\hat{\varphi}_{RF}\right) Arc\tan\left(\frac{s_{QI}}{s_{QQ}}\right)$$

si elle est proche de $\pi/2$ (modulo $\pi$);

$\hat{\varphi}_{RF}$ étant ladite estimation du signal RF et $S_{II}, S_{IQ}, S_{QI}, S_{QQ}$ étant respectivement les premier, second, troisième et quatrième signaux de projection.

Pour déterminer si la phase du signal en bande de base est proche de 0, resp. $\pi/2$ (modulo $\pi$), on détermine, selon une première variante, si une estimation de cette phase par un troisième estimateur :

$$\hat{\varphi}_{BB}^1 = Arc\tan\sqrt{\frac{s_{IQ}^2 + s_{QQ}^2}{s_{QI}^2 + s_{II}^2}}$$

est proche de 0, resp. $\pi/2$ (modulo $\pi$).

Selon une seconde variante, pour déterminer si la phase du signal en bande de base est proche de 0, resp.

$\pi/2$ (modulo $\pi$), on détermine si une estimation de cette phase par un quatrième estimateur :

$$\hat{\varphi}_{BB}^2 = \pi/2 - Arc\tan\sqrt{\frac{s_{QI}^2 + s_{II}^2}{s_{IQ}^2 + s_{QQ}^2}}$$

est proche de 0, resp. $\pi/2$ (modulo $\pi$).

De préférence, la phase du signal en bande de base est estimée à partir de :

$$\hat{\varphi}_{BB} = Arc\tan\sqrt{\frac{s_{IQ}^2 + s_{QQ}^2}{s_{QI}^2 + s_{II}^2}}$$

où $\boldsymbol{S}_{II}, \boldsymbol{S}_{IQ}, \boldsymbol{S}_{QI}, \boldsymbol{S}_{QQ}$ sont respectivement les premier, second, troisième et quatrième signaux de projection.

Alternativement, la phase du signal en bande de base est estimée à partir de :

$$\hat{\varphi}_{BB} = \pi/2 - Arc\tan\sqrt{\frac{s_{QI}^2 + s_{II}^2}{s_{IQ}^2 + s_{QQ}^2}}$$

où $\boldsymbol{S}_{II}, \boldsymbol{S}_{IQ}, \boldsymbol{S}_{QI}, \boldsymbol{S}_{QQ}$ sont respectivement les premier, second, troisième et quatrième signaux de projection.

La phase du signal RF est avantageusement estimée au moyen d'un premier estimateur :

$$\hat{\varphi}_{RF}^{3\&5} = \cos^2\left(\hat{\varphi}_{BB}\right) Arc\tan\left(\frac{s_{QI}}{s_{II}}\right) + \sin^2\left(\hat{\varphi}_{BB}\right) Arc\tan\left(\frac{s_{QQ}}{s_{IQ}}\right)$$

si elle est proche de 0 (modulo $\pi$) ou bien au moyen d'un second estimateur :

$$\hat{\varphi}_{RF}^{4\&6} = \pi/2 - \cos^2\left(\hat{\varphi}_{BB}\right) Arc\tan\left(\frac{s_{II}}{s_{QI}}\right) - \sin^2\left(\hat{\varphi}_{BB}\right) Arc\tan\left(\frac{s_{IQ}}{s_{QQ}}\right)$$

si elle est proche de $\pi/2$ (modulo $\pi$);
$\hat{\varphi}_{BB}$ étant ladite estimation du signal en bande de base et $\boldsymbol{S}_{II}, \boldsymbol{S}_{IQ}, \boldsymbol{S}_{QI}, \boldsymbol{S}_{QQ}$ étant respectivement les premier, second, troisième et quatrième signaux de projection.

Selon une première variante, pour déterminer si la phase du signal RF est proche de 0, resp. $\pi/2$ (modulo $\pi$), on détermine si une estimation de cette phase par un troisième estimateur :

$$\hat{\varphi}_{RF}^1 = Arc\tan\sqrt{\frac{s_{QI}^2 + s_{QQ}^2}{s_{IQ}^2 + s_{II}^2}}$$

est proche de 0, resp. $\pi/2$ (modulo $\pi$).

Selon une seconde variante, pour déterminer si la phase du signal RF est proche de 0, resp. $\pi/2$ (modulo $\pi$), on détermine si une estimation de cette phase par un quatrième estimateur :

$$\hat{\varphi}_{RF}^2 = \pi/2 - Arc\tan\sqrt{\frac{s_{IQ}^2 + s_{II}^2}{s_{QI}^2 + s_{QQ}^2}}$$

est proche de 0, resp. $\pi/2$ (modulo $\pi$).

La première estimation du temps d'arrivée $\hat{\tau}_{BB}$ de l'impulsion UWB est typiquement obtenue à partir de :

$$\hat{\tau}_{BB} = \tau_{window} + \Delta T \frac{\hat{\varphi}_{BB}}{2\pi}$$

où $\tau_{window}$ est le début de ladite fenêtre temporelle, $\Delta T$ est la durée de ladite fenêtre temporelle et $\hat{\varphi}_{BB}$ est ladite estimation de la phase du signal en bande de base.

De manière similaire, la seconde estimation du temps d'arrivée $\hat{\tau}_{RF}$ de l'impulsion UWB est typiquement obtenue à partir de :

$$\hat{\tau}_{RF} = \tau_{window} + T_0 . \frac{\hat{\varphi}_{RF} - \gamma}{2\pi} + k \frac{T_0}{2}$$

où $\tau_{window}$ est le début de ladite fenêtre temporelle, $T_0$ est une période de la fréquence porteuse, $\hat{\varphi}_{RF}$ est ladite estimation de la phase du signal RF, $k$ est un entier positif, négatif ou nul, et $\gamma$ est un déphasage obtenu par calibration.

Ledit entier est avantageusement déterminé de manière à minimiser en valeur absolue l'écart entre les première et seconde estimations du temps d'arrivée.

## BRÈVE DESCRIPTION DES DESSINS

D'autres caractéristiques et avantages de l'invention apparaîtront à la lecture de modes de réalisation préférentiels de l'invention fait en référence aux figures jointes parmi lesquelles :

La Fig. 1, déjà décrite, représente un exemple de signal UWB de type impulsionnel ;
La Fig. 2, déjà décrite, représente de manière schématique la structure d'un premier récepteur UWB permettant de détecter la présence d'une impulsion UWB dans une fenêtre temporelle ;
La Fig. 3, déjà décrite, représente de manière schématique la structure d'un second récepteur UWB permettant de détecter la présence d'une impulsion UWB dans une fenêtre temporelle ;
La Fig. 4 représente de manière schématique la structure d'un récepteur UWB permettant d'estimer le temps d'arrivée d'une impulsion selon un premier ou un second mode de réalisation de l'invention ;
La Fig. 5 représente la variation de trois estimateurs de phase en fonction du temps d'arrivée ;
La Fig. 6 représente une erreur d'estimation de phase à partir du récepteur UWB de la Fig.4.

## EXPOSÉ DÉTAILLÉ DE MODES DE RÉALISATION PARTICULIERS

Nous considérerons dans la suite un récepteur destiné à recevoir un signal UWB impulsionnel. Ce signal impulsionnel, peut être codé par un code de sauts temporels ou non, non modulé ou bien modulé par des symboles de modulation appartenant à un alphabet de modulation en position, en signe ou en amplitude. Dans tous les cas, on supposera que le récepteur doit déterminer le temps d'arrivée d'une impulsion UWB, soit pour pouvoir se synchroniser soit pour en déduire un temps de propagation ou une distance.

Une impulsion du signal UWB reçue par le récepteur peut généralement s'écrire sous la forme :

$$s_r(t) = p(t).\cos(2\pi f_0(t - \tau) + \gamma) \tag{3}$$

où $p(t) = A_r \exp\left( -\frac{(t-\tau)^2}{2.\Delta_\tau^2} \right)$ est la forme d'onde de l'impulsion en bande de base, supposée gaussienne, $f_0$ est la fréquence porteuse, $\gamma$ est l'offset de phase entre l'émetteur et le récepteur (plus précisément entre le signal de porteuse généré par l'oscillateur local de l'émetteur et le signal de translation en bande de base généré par l'oscillateur local du récepteur) ; $A_r$ est l'amplitude de l'impulsion et $\Delta_\tau$ est un durée représentative de l'inverse de la largeur de bande de l'impulsion.

L'idée à la base de l'invention est d'utiliser l'architecture à double quadrature connue de l'art intérieur mais d'exploiter à la fois l'information de phase issue du signal RF ainsi que celle issue du signal ramené en bande de base

**6**

pour estimer plus précisément le temps d'arrivée de l'impulsion.

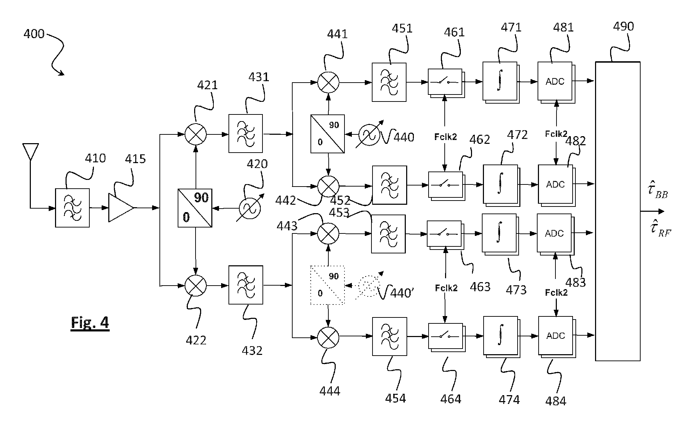

Plus précisément, la Fig. 4 représente schématiquement un récepteur UWB à double quadrature selon un mode de réalisation de l'invention.

Le récepteur 400, comprend en entrée, un filtre RF, 410, suivi par un amplificateur bas bruit, 415. Le signal UWB reçu, filtré et amplifié, est translaté en bande de base grâce à un premier mélangeur en quadrature. Ce mélangeur en quadrature comprend un oscillateur local 420 à une fréquence de réception, $f_{LO1}$ idéalement calée sur la fréquence $f_0$, et deux mélangeurs élémentaires 421, 422, mélangeant le signal UWB avec deux sinusoïdes en quadrature pour fournir, après filtrage passe-bas dans les filtres 431 et 432, des signaux en bande de base, $S_I$, pour la voie en phase et $S_Q$ pour la voie en quadrature.

Le signal $S_I$ est projeté sur une base orthogonale à l'aide d'un second mélangeur en quadrature, ladite base orthogonale étant constituée par deux signaux orthogonaux basse fréquence, par exemple deux sinusoïdes orthogonales à une fréquence $f_{LO2} << f_{LO1}$. Ce second modulateur en quadrature comprend un oscillateur local 440 et deux mélangeurs élémentaires, 441 et 442, mélangeant respectivement le signal $S_I$ avec les deux signaux orthogonaux précités. Les signaux projetés sont filtrés à l'aide des filtres passe-bas 451,452, puis échantillonnés à l'aide des échantillonneurs 461,462 avant d'être intégrés sur une fenêtre temporelle à l'aide des intégrateurs 471,472 et numérisés par les convertisseurs analogique-numérique 481,482. En sortie de ces convertisseurs, les signaux projetés sur la base orthogonale sont notés respectivement $S_{II}, S_{IQ}$.

De manière similaire, le signal $S_Q$ est projeté sur la même base orthogonale à l'aide d'un troisième mélangeur en quadrature. Ce troisième mélangeur comprend un oscillateur local 440' et deux mélangeurs élémentaires, 443 et 444, mélangeant respectivement le signal $S_Q$ avec les deux signaux orthogonaux précités. L'oscillateur local 440' à la fréquence $f_{LO2}$ peut être confondu avec l'oscillateur local 440. Les signaux projetés sont filtrés à l'aide des filtres passe-bas 453,454, puis échantillonnés à l'aide des échantillonneurs 463,464 avant d'être intégrés sur une fenêtre temporelle à l'aide des intégrateurs 473,474 et numérisés par les convertisseurs analogique-numérique 483,484. En sortie de ces convertisseurs, les signaux projetés sur la base orthogonale sont notés respectivement $S_{QI}, S_{QQ}$.

On notera que les convertisseurs 481-484 peuvent être situés plus en amont dans la chaine de traitement, par exemple juste après les échantillonneurs 461-464, l'intégration sur la fenêtre temporelle se faisant alors de manière numérique.

Le signal $S_{II}$ en sortie de la première voie est donné par l'expression:

$$s_{II} = \int_{\Delta T} s_r(t).\cos(2\pi f_{LO1}t).\cos(2\pi f_{LO2}t).dt \qquad (4)$$

dans laquelle on a supposé que la base orthogonale était constituée par $\cos(2\pi f_{LO2}t)$ et $\sin(2\pi f_{LO2}t)$ et où $\Delta T$ est la largeur de la fenêtre d'intégration.

Etant donné que le signal $s_r(t)$ est filtré par les filtres passe-bas, 431 et 432 en sortie du premier mélangeur, les contributions spectrales à $2f_0$ sont éliminées et le signal $S_{II}$ prend la forme :

$$s_{II} = \frac{1}{2}\cos(\gamma - 2\pi f_0 \tau) \int_{\Delta T} A_r.p(t-\tau).\cos(2\pi f_{LO2}t)dt \qquad (5)$$

En pratique, la durée caractéristique de l'impulsion est sensiblement plus courte que la largeur de la fenêtre d'intégration. Il en résulte que l'impulsion peut être approximée par une fonction de Dirac et donc que :

$$s_{II} \approx \frac{1}{2}\cos(\gamma - 2\pi f_0 \tau).\cos(2\pi f_{LO2}\tau) \int_{\Delta T} A_r.p(t-\tau)dt$$
$$\approx \frac{\alpha}{2}.\cos(\varphi_{RF}(\tau)).\cos(\varphi_{BB}(\tau)) \qquad (6)$$

où la constante $\alpha$ est proportionnelle à l'énergie de l'impulsion et où l'on a noté $\varphi_{RF}(\tau) = \gamma - 2\pi f_0 \tau$, $\varphi_{BB}(\tau) = 2\pi f_{LO2}\tau$.

On obtient des expressions similaires pour les autres voies, à savoir :

$$s_{II} \approx \frac{\alpha}{2}.\cos(\varphi_{RF}(\tau)).\cos(\varphi_{BB}(\tau)) \qquad (7\text{-}1)$$

$$s_{IQ} \approx \frac{\alpha}{2}.\cos\big(\varphi_{RF}(\tau)\big).\sin\big(\varphi_{BB}(\tau)\big) \qquad (7\text{-}2)$$

$$s_{QI} \approx -\frac{\alpha}{2}.\sin\big(\varphi_{RF}(\tau)\big).\cos\big(\varphi_{BB}(\tau)\big) \qquad (7\text{-}3)$$

$$s_{QQ} \approx -\frac{\alpha}{2}.\sin\big(\varphi_{RF}(\tau)\big).\sin\big(\varphi_{BB}(\tau)\big) \qquad (7\text{-}4)$$

Le récepteur 400 comprend enfin un calculateur 490 recevant les signaux $S_{II}, S_{IQ}, S_{QI}, S_{QQ}$ et en déduisant une estimation du temps d'arrivée comme expliqué ci-après.

On remarque que les signaux $S_{II}, S_{IQ}, S_{QI}, S_{QQ}$ comprennent chacun deux termes multiplicatifs de phase, un premier terme caractéristique de la phase du signal RF par rapport à la porteuse et un second terme caractéristique de la phase du signal en bande de base par rapport au début de la fenêtre d'intégration.

Un estimateur du temps d'arrivée peut être obtenu en éliminant par exemple les premiers termes multiplicatifs entre les équations (7-1) et (7-3) d'une part et les équations (7-2) et (7-4), d'autre part.

Ainsi, selon une première variante, la phase $\varphi_{BB}(\tau)$ peut être estimée comme suit :

$$\hat{\varphi}^1_{BB} = Arc\tan\sqrt{\frac{s^2_{IQ} + s^2_{QQ}}{s^2_{QI} + s^2_{II}}} \qquad (8\text{-}1)$$

Selon une seconde variante, la phase $\varphi_{BB}(\tau)$ peut être estimée par :

$$\hat{\varphi}^2_{BB} = \pi/2 - Arc\tan\sqrt{\frac{s^2_{QI} + s^2_{II}}{s^2_{IQ} + s^2_{QQ}}} \qquad (8\text{-}2)$$

Du fait de la présence des racines carrées comme argument de la fonction arc tangente dans les expressions (8-1) et (8-2), on comprend que les estimateurs $\hat{\varphi}^1_{BB}$ et $\hat{\varphi}^2_{BB}$ estiment la phase $\varphi_{BB}(\tau)$ au signe près.

Pour estimer la phase signée $\varphi_{BB}(\tau)$ on peut recourir aux estimateurs suivants :

Selon une première variante, la phase $\varphi_{BB}(\tau)$ peut être estimée comme suit :

$$\hat{\varphi}^3_{BB} = Arc\tan\left(\frac{s_{IQ}}{s_{II}}\right) \qquad (9\text{-}1)$$

Selon une seconde variante, la phase $\varphi_{BB}(\tau)$ peut être estimée par :

$$\hat{\varphi}^4_{BB} = \pi/2 - Arc\tan\left(\frac{s_{II}}{s_{IQ}}\right) \qquad (9\text{-}2)$$

Selon une troisième variante, la phase $\varphi_{BB}(\tau)$ peut être estimée par :

$$\hat{\varphi}^5_{BB} = Arc\tan\left(\frac{s_{QQ}}{s_{QI}}\right) \qquad (9\text{-}3)$$

Selon une quatrième variante, la phase $\varphi_{BB}(\tau)$ peut être estimée par :

$$\hat{\varphi}_{BB}^6 = \pi/2 - Arc\tan\left(\frac{s_{QI}}{s_{QQ}}\right) \qquad (9\text{-}4)$$

Selon un premier mode de réalisation de l'invention, on effectue d'abord une première estimation de la phase du signal en bande de base. Avantageusement, cette première estimation peut être réalisée à l'aide de l'estimateur (8-1) ou (8-2).

Cette première estimation présente l'avantage d'être stable dans la mesure où elle prend en compte plusieurs sorties du démodulateur à double quadrature. En revanche, comme indiqué plus haut, elle ne permet pas d'accéder au signe de la phase.

Grâce à cette première estimation, on détermine si la phase $\varphi_{BB}(\tau)$ est plus proche de 0 (modulo $\pi$) ou plus proche de $\pi/2$ (modulo $\pi$).

Dans le premier cas, on utilise une combinaison linéaire d'un premier couple d'estimateurs de la phase du signal en bande de base, à savoir des estimateurs donnés par (9-1) et (9-3) ou bien par (9-2) et (9-4).

L'estimateur donné par (9-1) ou (9-2) donne de bons résultats lorsque la voie en phase (le signal $S_I$) présente une intensité élevée (celle-ci est proportionnelle à $\cos^2(\varphi_{RF}(\tau))$). Il donne des résultats bruités lorsque cette intensité est faible. De manière similaire l'estimateur donné par (9-3) ou (9-4) donne de bons résultats lorsque la voie en quadrature (le signal $S_Q$) présente une intensité élevée (celle-ci est proportionnelle à $\sin^2(\varphi_{RF}(\tau))$) et des résultats bruités lorsque cette intensité est faible.

On pondère alors avantageusement les estimateurs portant sur les voies I et Q par les intensités respectives des signaux $S_I$ et $S_Q$, pour obtenir une seconde estimation de la phase du signal en bande de base, présentant une bonne robustesse au bruit, quelle que soit la distribution de l'énergie sur les quatre sorties $S_{II}, S_{IQ}, S_{QI}, S_{QQ}$ :

$$\hat{\varphi}_{BB}^{3\&5} = \cos^2\left(\hat{\varphi}_{RF}\right) Arc\tan\left(\frac{s_{IQ}}{s_{II}}\right) + \sin^2\left(\hat{\varphi}_{RF}\right) Arc\tan\left(\frac{s_{QQ}}{s_{QI}}\right) \qquad (10)$$

où $\hat{\varphi}_{RF}$ est une estimation de la phase du signal RF, $\varphi_{RF}(\tau)$, donnée par exemple par l'estimateur :

$$\hat{\varphi}_{RF}^1 = Arc\tan\sqrt{\frac{s_{QI}^2 + s_{QQ}^2}{s_{IQ}^2 + s_{II}^2}} \qquad (11\text{-}1)$$

ou bien par l'estimateur :

$$\hat{\varphi}_{RF}^2 = \pi/2 - Arc\tan\sqrt{\frac{s_{IQ}^2 + s_{II}^2}{s_{QI}^2 + s_{QQ}^2}} \qquad (11\text{-}2)$$

Du fait de la présence de la racine carrée dans l'argument de la fonction arc tangent, les estimateurs $\hat{\varphi}_{RF}^1$ et $\hat{\varphi}_{RF}^2$ estiment la phase $\varphi_{RF}(\tau)$ au signe près. Cependant, cette incertitude est sans effet dans l'estimateur $\hat{\varphi}_{BB}^{3\&5}$ puisqu'ils interviennent de manière quadratique.

Lorsque $\varphi_{BB}(\tau)$ est proche de 0, l'estimateur $\hat{\varphi}_{BB}^{3\&5}$ est stable et présente une bonne linéarité ainsi qu'une meilleure précision que $\hat{\varphi}_{BB}^1$ ou $\hat{\varphi}_{BB}^2$.

Dans le second cas évoqué plus haut, à savoir lorsque $\varphi_{BB}(\tau)$ est proche de $\pi/2$ (modulo $\pi$), l'estimateur $\hat{\varphi}_{BB}^{3\&5}$ est instable et l'on préfère utiliser une combinaison linéaire d'un second couple d'estimateurs opérant sur la voie à quadrature, à savoir ceux donnés par (9-2) et (9-4) :

$$\hat{\varphi}_{BB}^{4\&6} = \cos^2\left(\hat{\varphi}_{RF}\right).\left[\pi/2 - Arc\tan\left(\frac{s_{II}}{s_{IQ}}\right)\right] + \sin^2\left(\hat{\varphi}_{RF}\right)\left[\pi/2 - Arc\tan\left(\frac{s_{QI}}{s_{QQ}}\right)\right] \tag{12}$$

qui se réduit plus simplement à :

$$\hat{\varphi}_{BB}^{4\&6} = \pi/2 - \cos^2\left(\hat{\varphi}_{RF}\right).Arc\tan\left(\frac{s_{II}}{s_{IQ}}\right) - \sin^2\left(\hat{\varphi}_{RF}\right)Arc\tan\left(\frac{s_{QI}}{s_{QQ}}\right) \tag{13}$$

Ainsi, si la phase $\varphi_{BB}(\tau)$ est plus proche de 0 que de $\pi/2$ (modulo $\pi$), on utilise l'estimateur $\hat{\varphi}_{BB}^{3\&5}$ et à l'inverse on utilise l'estimateur $\hat{\varphi}_{BB}^{4\&6}$.

Dans le mode de réalisation décrit ci-dessus, le calculateur 490 effectue l'estimation de phase en bande de base, $\varphi_{BB}$, selon les expressions (10) et (13) selon qu'elle est plus proche de 0 ou de $\pi/2$ comme expliqué précédemment.

Il est convient de noter que d'autres estimateurs de la phase en bande de base peuvent être alternativement utilisés. Par exemple, on pourra dans un premier temps estimer l'énergie $\alpha^2$ du signal reçu à partir des signaux $s_{II}, s_{IQ}, s_{QI}, s_{QQ}$ puis estimer la phase $\varphi_{BB}(\tau)$ effectuer une combinaison de termes en $Arc\cos\left(\frac{2\sqrt{s_{II}^2 + s_{QI}^2}}{\hat{\alpha}}\right)$ et

$$Arc\sin\left(\frac{2\sqrt{s_{IQ}^2 + s_{QQ}^2}}{\hat{\alpha}}\right).$$

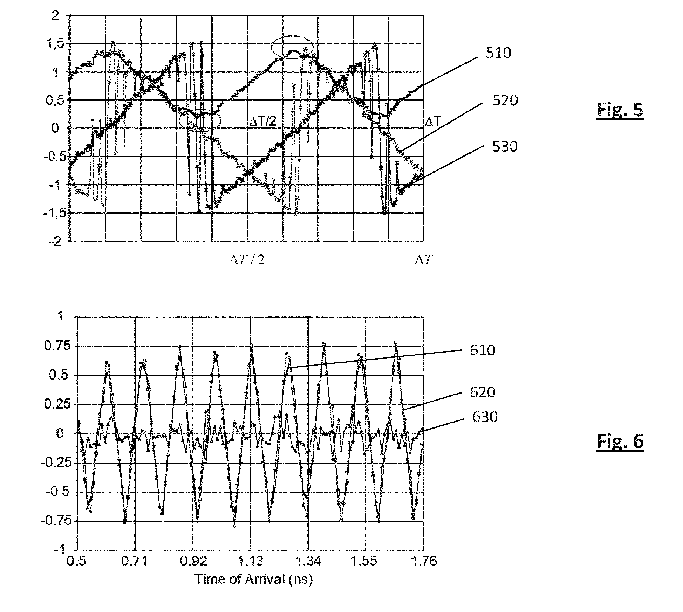

La Fig. 5 représente la variation des estimations de $\varphi_{BB}(\tau)$ données respectivement par les estimateurs $\hat{\varphi}_{BB}^{1}$, $\hat{\varphi}_{BB}^{3\&5}$ et $\hat{\varphi}_{BB}^{4\&6}$, en fonction du temps d'arrivée $\tau$ parcourant la plage temporelle d'une fenêtre d'intégration de largeur $\Delta T$.

On remarque que l'estimation donnée par l'estimateur $\hat{\varphi}_{BB}^{1}$ (courbe 510) est erronée pour 0 et $\pi/2$ (zones entourées par des ellipses). En effet, les erreurs dues au bruit sont sommées quadratiquement au numérateur et au dénominateur de l'expression (8-1). Le bruit étant prépondérant par rapport au signal au numérateur de cette expression lorsque $\varphi_{BB}(\tau)$ est proche de 0 (modulo $\pi$), et par rapport au signal au dénominateur lorsque $\varphi_{BB}(\tau)$ est proche de $\pi/2$ (modulo $\pi$), on comprend pourquoi la précision de l'estimateur $\hat{\varphi}_{BB}^{1}$ est dégradée autour de ces valeurs.

D'autre part, on note que l'estimateur $\hat{\varphi}_{BB}^{3\&5}$ (courbe 520) est instable autour de $\pi/2$ (modulo $\pi$) alors que l'estimateur $\hat{\varphi}_{BB}^{4\&6}$ (courbe 530) est linéaire autour de ces mêmes valeurs. Réciproquement, l'estimateur $\hat{\varphi}_{BB}^{4\&6}$ est instable autour de 0 (modulo $\pi$) alors que l'estimateur $\hat{\varphi}_{BB}^{3\&5}$ est linéaire autour de ces mêmes valeurs. On comprend par conséquent qu'une commutation entre $\hat{\varphi}_{BB}^{3\&5}$ et $\hat{\varphi}_{BB}^{4\&6}$ suivant l'estimation (grossière) donnée par $\hat{\varphi}_{BB}^{1}$ (ou $\hat{\varphi}_{BB}^{2}$) permet d'obtenir une mesure du temps d'arrivée avec une meilleure précision que $\hat{\varphi}_{BB}^{1}$.

Selon un second mode de réalisation de l'invention, on effectue d'abord une première estimation de la phase du signal RF. Avantageusement, cette première estimation peut être réalisée à l'aide de l'estimateur (11-1) ou (11-2).

Grâce à cette première estimation, on détermine si la phase $\varphi_{RF}(\tau)$ est plus proche de 0 (modulo $\pi$) ou plus proche de $\pi/2$ (modulo $\pi$).

Dans le premier cas, on utilise une combinaison linéaire d'un premier couple d'estimateurs de la phase du signal en bande de base, à savoir des estimateurs :

$$\hat{\varphi}_{RF}^{3} = Arc\tan\left(\frac{s_{QI}}{s_{II}}\right) \tag{14-1}$$

et

$$\hat{\varphi}_{RF}^5 = Arc\tan\left(\frac{s_{QQ}}{s_{IQ}}\right) \qquad (14\text{-}2)$$

L'estimateur défini par (14-1) donne de bons résultats lorsque la projection sur le premier signal de la base orthogonale en bande de base présente une intensité élevée (cette dernière est proportionnelle à $\cos^2(\varphi_{BB}(\tau))$). Il donne en revanche des résultats bruités lorsque cette intensité est faible. On a alors recours à l'estimateur défini par (14-2). Celui-ci donne de bons résultats lorsque la projection sur le second signal de la base orthogonale en bande de base présente une intensité élevée (cette dernière est proportionnelle à $\sin^2(\varphi_{BB}(\tau))$).

On pondère avantageusement les estimateurs (14-1) et (14-2) de manière à obtenir une bonne robustesse au bruit, quelle que soit la répartition de l'énergie sur les quatre sorties $\boldsymbol{s_{II}}, \boldsymbol{s_{IQ}}, \boldsymbol{s_{QI}}, \boldsymbol{s_{QQ}}$ :

$$\hat{\varphi}_{RF}^{3\&5} = \cos^2\left(\hat{\varphi}_{BB}\right) Arc\tan\left(\frac{s_{QI}}{s_{II}}\right) + \sin^2\left(\hat{\varphi}_{BB}\right) Arc\tan\left(\frac{s_{QQ}}{s_{IQ}}\right) \qquad (15)$$

où $\hat{\varphi}_{BB}$ est une estimation de la phase du signal en bande de base, par exemple $\hat{\varphi}_{BB} = \hat{\varphi}_{BB}^1$ ou $\hat{\varphi}_{BB}^2$ donnés par les expressions (8-1) et (8-2). Alternativement, on pourra utiliser une estimation de la phase du signal en bande de base au moyen des estimateurs (10) et (13).

Dans le second cas évoqué plus haut, à savoir lorsque $\varphi_{RF}(\tau)$ est proche de $\pi/2$ (modulo $\pi$), l'estimateur $\hat{\varphi}_{RF}^{3\&5}$ est instable et l'on préfère utiliser une combinaison linéaire d'un second couple d'estimateurs de la phase du signal en bande de base, à savoir :

$$\hat{\varphi}_{RF}^4 = \pi/2 - Arc\tan\left(\frac{s_{II}}{s_{QI}}\right) \qquad (16\text{-}1)$$

et

$$\hat{\varphi}_{RF}^6 = \pi/2 - Arc\tan\left(\frac{s_{IQ}}{s_{QQ}}\right) \qquad (16\text{-}2)$$

L'estimateur défini par (16-1) donne de bons résultats lorsque la projection sur le premier signal de la base orthogonale en bande de base présente une intensité élevée mais des résultats bruités lorsque cette intensité est faible.

A l'inverse, l'estimateur donné par (16-2) donne de bons résultats lorsque la projection sur le second signal de la base orthogonale en bande de base présente une intensité élevée mais des résultats bruités lorsque cette intensité est faible.

On pondère alors avantageusement les estimateurs (17-1) et (17-2) de manière à obtenir une bonne robustesse au bruit, quelle que soit la répartition de l'énergie sur les quatre sorties $s_{II}, s_{IQ}, s_{QI}, s_{QQ}$ :

$$\hat{\varphi}_{RF}^{4\&6} = \cos^2\left(\hat{\varphi}_{BB}\right)\left[\pi/2 - Arc\tan\left(\frac{s_{II}}{s_{QI}}\right)\right] + \sin^2\left(\hat{\varphi}_{BB}\right)\left[\pi/2 - Arc\tan\left(\frac{s_{IQ}}{s_{QQ}}\right)\right] \qquad (17)$$

qui se réduit plus simplement à :

$$\hat{\varphi}_{RF}^{4\&6} = \pi/2 - \cos^2\left(\hat{\varphi}_{BB}\right) Arc\tan\left(\frac{s_{II}}{s_{QI}}\right) - \sin^2\left(\hat{\varphi}_{BB}\right) Arc\tan\left(\frac{s_{IQ}}{s_{QQ}}\right) \qquad (18)$$

Ainsi, si la phase $\varphi_{RF}(\tau)$ est plus proche de 0 que de $\pi/2$ (modulo $\pi$), on utilise l'estimateur $\hat{\varphi}_{RF}^{3\&5}$ et à l'inverse on utilise l'estimateur $\hat{\varphi}_{RF}^{4\&6}$. La commutation de l'un à l'autre peut se faire à partir d'une première estimation (grossière) de $\varphi_{RF}(\tau)$, par exemple celle donnée par $\hat{\varphi}_{RF}^1$ ou $\hat{\varphi}_{RF}^2$ et d'une comparaison par rapport à une valeur seuil (par exemple $\pi/4$).

La Fig. 6 représente l'erreur d'une estimation de la phase $\varphi_{RF}(\tau)$ à partir du récepteur de la Fig. 4.

On a supposé ici que l'estimation de phase était réalisée grâce aux estimateurs (15) et (18). La fréquence $f_{LO1}$ supposée égale à la fréquence $f_0$ de l'émetteur est de 4 GHz, la fréquence $f_{LO2}$ est supposée égale à 400 MHz.

Plus précisément, la Fig. 6 donne en 610 la variation de l'estimation de phase $\hat{\varphi}_{RF}$ pour une plage de temps d'arrivée de l'impulsion UWB, en 620 la variation théorique de la phase $\varphi_{RF}$. L'erreur d'estimation est représentée en 630.

On remarque que l'erreur sur la phase est inférieure à 0.2 rad, ce qui se traduit par une erreur correspondante sur la distance inférieure à 2.5 mm, soit un ordre de grandeur plus faible que l'erreur obtenue au moyen du récepteur de l'art antérieur.

Quel que soit le mode de réalisation de l'invention, le calculateur effectue une estimation du de la phase du signal en bande de base ($\varphi_{BB}(\tau)$) et une estimation de la phase du signal RF ($\varphi_{RF}(\tau)$), une estimation pouvant exploiter l'autre comme décrit précédemment. Avantageusement, on pourra effectuer des itérations croisées entre l'estimation de $\varphi_{BB}(\tau)$ et celle de $\varphi_{RF}(\tau)$. Par exemple, on pourra effectuer une estimation de $\varphi_{BB}(\tau)$ selon (10) et (13) puis injecter cette estimation dans (15) et (18) pour obtenir une estimation de $\varphi_{RF}(\tau)$. Cette estimation de $\varphi_{RF}(\tau)$ peut être à son tour utiliser dans (10) et (13) pour une estimation plus précise de $\varphi_{BB}(\tau)$, etc.

Une fois obtenues les estimations de $\varphi_{BB}(\tau)$ et $\varphi_{RF}(\tau)$, notées respectivement $\hat{\varphi}_{BB}$ et $\hat{\varphi}_{RF}$, le calculateur 490 obtient une première estimation du temps d'arrivée de l'impulsion au moyen de :

$$\hat{\tau}_{BB} = \tau_{window} + \Delta T \frac{\hat{\varphi}_{BB}}{2\pi} \qquad (19)$$

où $\tau_{window}$ est le temps indiquant le début de la fenêtre temporelle et une seconde estimation du temps d'arrivée de l'impulsion au moyen de :

$$\hat{\tau}_{RF} = \tau_{window} + T_0 . \frac{\hat{\varphi}_{RF} - \gamma}{2\pi} + k\frac{T_0}{2} \qquad (20)$$

où $k$ est un entier positif, négatif ou nul traduisant le fait que la phase $\varphi_{RF}(\tau)$ est connue modulo $\pi$ et où $\pi$ est le déphasage entre l'émetteur et le récepteur (étant compris que cette phase est nulle si l'émetteur et le récepteur sont confondus). Le déphasage peut être obtenu par exemple au moyen d'une étape de calibration.

On note que l'estimation (19) ne présente pas d'ambiguïté mais qu'elle en revanche moins précise que l'estimation (20).

Le calculateur 490 détermine l'entier $\hat{k}$ de l'estimation (20) tel que :

$$\hat{k} = \arg\min_{k}\left(\left|\hat{\tau}_{RF} - \hat{\tau}_{BB}\right|\right) \qquad (21)$$

et en déduit l'estimation finale du temps d'arrivée par :

$$\hat{\tau}_{RF} = \tau_{window} + T_0 . \frac{\hat{\varphi}_{RF} - \gamma}{2\pi} + \hat{k}\frac{T_0}{2} \qquad (22)$$

Comme annoncé, cette estimation prend en compte à la fois l'estimation de phase $\hat{\varphi}_{BB}$ (pour éliminer l'ambiguïté de phase) et $\hat{\varphi}_{RF}$ (pour obtenir un haut degré de précision).

Dans les modes de réalisation décrits ci-dessus, on a supposé que $f_{LO2} = f_0$, c'est-à-dire que l'offset de fréquence du récepteur était nul.

Enfin, l'oscillateur de fréquence 440 (440') pourra être calibré de manière à ce que $f_{LO2} = f_0$ (offset de fréquence nul entre le récepteur et l'émetteur). Pour ce faire, l'émetteur peut transmettre une pluralité d'impulsions successives séparées par un temps prédéterminé $\delta t$.

Si l'on suppose que le récepteur est immobile par rapport à l'émetteur pendant l'étape de calibration, un offset de fréquence $\delta f = f_{LO2} - f_0$ entre l'émetteur et le récepteur se traduit par un glissement de phase de $2\pi\delta f.\delta t$ entre deux impulsions consécutives. Il est donc aisé de déterminer et de corriger l'offset $\delta f$ à à partir des mesures $\hat{\varphi}_{RF}$ correspondant à ces impulsions. Le cas échéant cette étape de calibration peut être répétée à intervalles réguliers.

D'autres méthodes de calibration de l'offset de fréquence ou du déphasage du récepteur pourront être envisagées par l'homme du métier sans sortir du cadre de la présente invention.

## Revendications

1. Méthode d'estimation de temps d'arrivée d'une impulsion UWB comprise dans un signal RF, ladite impulsion UWB étant modulée à une fréquence porteuse ($f_0$), ladite méthode d'estimation comprenant les étapes suivantes:

   (a) réception du signal RF et translation du signal ainsi reçu en bande de base au moyen d'un premier mélange en quadrature (421,422) pour fournir un signal en phase ($S_I$) et un signal en quadrature ($S_Q$) avec le signal d'un premier oscillateur local (420), lesdits signaux en phase et en quadrature formant un signal en bande de base ;
   (b) projection du signal en phase ($S_I$) sur une base constituée par un premier et un second signaux périodiques, orthogonaux entre eux, pour fournir respectivement un premier et un second signaux de projection ($S_{II},S_{IQ}$), ladite projection étant réalisée au moyen d'un second mélange en quadrature (441, 442) et d'une intégration (471, 472) sur une fenêtre temporelle ;
   (c) projection du signal en quadrature ($S_Q$) sur une ladite base, pour fournir respectivement un troisième et un quatrième signaux de projection ($S_{QI},S_{QQ}$), ladite projection étant réalisée au moyen d'un troisième mélange en quadrature (443, 444) et d'une intégration (473, 474) sur ladite fenêtre temporelle ;
   **caractérisée en ce qu'**elle comprend :

   une estimation de la phase du signal RF ($\varphi_{RF}(\tau)$) par rapport au signal du premier oscillateur local ainsi qu'une estimation de la phase du signal en bande de base ($\varphi_{BB}(\tau)$) par rapport au premier/second signal périodique, à partir des premier, second, troisième et quatrième signaux de projection, le temps d'arrivée ($\hat{\tau}_{RF}, \hat{\tau}_{BB}$) de ladite impulsion étant obtenu à partir des deux phases ainsi estimées ($\hat{\varphi}_{RF}(\tau), \hat{\varphi}_{BB}(\tau)$).

2. Méthode d'estimation de temps d'arrivée selon la revendication 1, **caractérisée en ce que** l'obtention du temps d'arrivée comprend :

   - une première estimation du temps d'arrivée à partir de la phase du signal en bande de base ainsi estimée ;
   - une seconde estimation du temps d'arrivée à partir de la phase du signal RF ainsi estimée, cette seconde estimation étant obtenue avec une ambigüité égale à un multiple entier près de la demi-période de la fréquence porteuse ;
   - une comparaison des première et seconde estimations du temps d'arrivée pour obtenir une estimation du temps d'arrivée, dépourvue d'ambigüité, sur la base de ladite seconde estimation.

3. Méthode d'estimation de temps d'arrivée selon la revendication 1 ou 2, **caractérisée en ce que** la phase du signal RF est estimée à partir de :

$$\hat{\varphi}_{RF} = Arc\tan \sqrt{\frac{\hat{S}_{QI}^2 + \hat{S}_{QQ}^2}{\hat{S}_{IQ}^2 + \hat{S}_{II}^2}}$$

où $S_{II}$, $S_{IQ}$, $S_{QI}$, $S_{QQ}$ sont respectivement les premier, second, troisième et quatrième signaux de projection.

4. Méthode d'estimation de temps d'arrivée selon la revendication 1 ou 2, **caractérisée en ce que** la phase du signal RF est estimée à partir de :

$$\hat{\varphi}_{RF} = \pi/2 - Arc\tan\sqrt{\frac{s_{IQ}^2 + s_{II}^2}{s_{QI}^2 + s_{QQ}^2}}$$

où $S_{II}, S_{IQ}, S_{QI}, S_{QQ}$ sont respectivement les premier, second, troisième et quatrième signaux de projection.

**5.** Méthode d'estimation de temps d'arrivée selon une des revendications 1 à 4, **caractérisée en ce que** la phase du signal en bande de base est estimée au moyen d'un premier estimateur :

$$\hat{\varphi}_{BB}^{3\&5} = \cos^2\left(\hat{\varphi}_{RF}\right)Arc\tan\left(\frac{s_{IQ}}{s_{II}}\right) + \sin^2\left(\hat{\varphi}_{RF}\right)Arc\tan\left(\frac{s_{QQ}}{s_{QI}}\right)$$

si elle est proche de 0 (modulo $\pi$) ou bien au moyen d'un second estimateur :

$$\hat{\varphi}_{BB}^{4\&6} = \pi/2 - \cos^2\left(\hat{\varphi}_{RF}\right).Arc\tan\left(\frac{s_{II}}{s_{IQ}}\right) - \sin^2\left(\hat{\varphi}_{RF}\right)Arc\tan\left(\frac{s_{QI}}{s_{QQ}}\right)$$

si elle est proche de $\pi/2$ (modulo $\pi$);
$\hat{\varphi}_{RF}$ étant ladite estimation du signal RF et $S_{II}, S_{IQ}, S_{QI}, S_{QQ}$ étant respectivement les premier, second, troisième et quatrième signaux de projection.

**6.** Méthode d'estimation de temps d'arrivée selon la revendication 5, **caractérisée en ce que** pour déterminer si la phase du signal en bande de base est proche de 0, resp. $\pi/2$ (modulo $\pi$), on détermine si une estimation de cette phase par un troisième estimateur :

$$\hat{\varphi}_{BB}^1 = Arc\tan\sqrt{\frac{s_{IQ}^2 + s_{QQ}^2}{s_{QI}^2 + s_{II}^2}}$$

est proche de 0, resp. $\pi/2$ (modulo $\pi$).

**7.** Méthode d'estimation de temps d'arrivée selon la revendication 5, **caractérisée en ce que** pour déterminer si la phase du signal en bande de base est proche de 0, resp. $\pi/2$ (modulo $\pi$), on détermine si une estimation de cette phase par un quatrième estimateur :

$$\hat{\varphi}_{BB}^2 = \pi/2 - Arc\tan\sqrt{\frac{s_{QI}^2 + s_{II}^2}{s_{IQ}^2 + s_{QQ}^2}}$$

est proche de 0, resp. $\pi/2$ (modulo $\pi$).

**8.** Méthode d'estimation de temps d'arrivée selon la revendication 1 ou 2, **caractérisée en ce que** la phase du signal en bande de base est estimée à partir de :

$$\hat{\varphi}_{BB} = Arc\tan\sqrt{\frac{s_{IQ}^2 + s_{QQ}^2}{s_{QI}^2 + s_{II}^2}}$$

où $S_{II}, S_{IQ}, S_{QI}, S_{QQ}$ sont respectivement les premier, second, troisième et quatrième signaux de projection.

9. Méthode d'estimation de temps d'arrivée selon la revendication 1 ou 2, **caractérisée en ce que** la phase du signal en bande de base est estimée à partir de :

$$\hat{\varphi}_{BB} = \pi/2 - Arc\tan\sqrt{\frac{s_{QI}^2 + s_{II}^2}{s_{IQ}^2 + s_{QQ}^2}}$$

où $S_{II}, S_{IQ}, S_{QI}, S_{QQ}$ sont respectivement les premier, second, troisième et quatrième signaux de projection.

10. Méthode d'estimation de temps d'arrivée selon la revendication 8 ou 9, **caractérisée en ce que** la phase du signal RF est estimée au moyen d'un premier estimateur :

$$\hat{\varphi}_{RF}^{3\&5} = \cos^2\left(\hat{\varphi}_{BB}\right) Arc\tan\left(\frac{s_{QI}}{s_{II}}\right) + \sin^2\left(\hat{\varphi}_{BB}\right) Arc\tan\left(\frac{s_{QQ}}{s_{IQ}}\right)$$

si elle est proche de 0 (modulo $\pi$) ou bien au moyen d'un second estimateur :

$$\hat{\varphi}_{RF}^{4\&6} = \pi/2 - \cos^2\left(\hat{\varphi}_{BB}\right) Arc\tan\left(\frac{s_{II}}{s_{QI}}\right) - \sin^2\left(\hat{\varphi}_{BB}\right) Arc\tan\left(\frac{s_{IQ}}{s_{QQ}}\right)$$

si elle est proche de $\pi/2$ (modulo $\pi$);
$\hat{\varphi}_{BB}$ étant ladite estimation du signal en bande de base et $S_{II}, S_{IQ}, S_{QI}, S_{QQ}$ étant respectivement les premier, second, troisième et quatrième signaux de projection.

11. Méthode d'estimation de temps d'arrivée selon la revendication 10, **caractérisée en ce que** pour déterminer si la phase du signal RF est proche de 0, resp. $\pi/2$ (modulo $\pi$), on détermine si une estimation de cette phase par un troisième estimateur :

$$\hat{\varphi}_{RF}^1 = Arc\tan\sqrt{\frac{s_{QI}^2 + s_{QQ}^2}{s_{IQ}^2 + s_{II}^2}}$$

est proche de 0, resp. $\pi/2$ (modulo $\pi$).

12. Méthode d'estimation de temps d'arrivée selon la revendication 10, **caractérisée en ce que** pour déterminer si la phase du signal RF est proche de 0, resp. $\pi/2$ (modulo $\pi$), on détermine si une estimation de cette phase par un quatrième estimateur :

$$\hat{\varphi}_{RF}^2 = \pi/2 - Arc\tan\sqrt{\frac{\hat{S}_{IQ}^2 + \hat{S}_{II}^2}{\hat{S}_{QI}^2 + \hat{S}_{QQ}^2}}$$

est proche de 0, resp. $\pi/2$ (modulo $\pi$).

13. Méthode d'estimation de temps d'arrivée selon l'une des revendications précédentes, **caractérisée en ce qu'**une première estimation du temps d'arrivée $\hat{\tau}_{BB}$ de l'impulsion UWB est obtenue à partir de :

$$\hat{\tau}_{BB} = \tau_{window} + \Delta T \frac{\hat{\varphi}_{BB}}{2\pi}$$

où $\tau_{window}$ est le début de ladite fenêtre temporelle, $\Delta T$ est la durée de ladite fenêtre temporelle et $\hat{\varphi}_{BB}$ est ladite estimation de la phase du signal en bande de base.

14. Méthode d'estimation de temps d'arrivée selon l'une des revendications précédentes, **caractérisée en ce qu'**une seconde estimation du temps d'arrivée $\hat{\tau}_{RF}$ de l'impulsion UWB est obtenue à partir de :

$$\hat{\tau}_{RF} = \tau_{window} + T_0 . \frac{\hat{\varphi}_{RF} - \gamma}{2\pi} + k\frac{T_0}{2}$$

où $\tau_{window}$ est le début de ladite fenêtre temporelle, $T_0$ est une période de la fréquence porteuse, $\hat{\varphi}_{RF}$ est ladite estimation de la phase du signal RF, $k$ est un entier positif, négatif ou nul, et $\gamma$ est un déphasage obtenu par calibration.

15. Méthode d'estimation de temps d'arrivée selon les revendications 13 et 14, **caractérisée en ce que** ledit entier est déterminé de manière à minimiser en valeur absolue l'écart entre les première et seconde estimations du temps d'arrivée.

**Patentansprüche**

1. Verfahren zur Abschätzung der Ankunftszeit eines UWB-Pulses, der in einem RF-Signal enthalten ist, wobei der UWB-Puls mit einer Trägerfrequenz ($f_0$) moduliert ist, wobei das Verfahren zur Abschätzung die folgende Schritte umfasst:

(a) Empfang des RF-Signals und Übertragung des derart empfangenen Signals ins Basisband mit Hilfe einer ersten Quadraturmischung (421, 422), um ein Phasensignal ($S_I$) und ein Quadratursignal ($S_Q$) zusammen mit dem Signal eines ersten Lokaloszillators (420) zu liefern, wobei das Phasen- und das Quadratursignal ein Basisbandsignal bilden;
(b) Projektion des Phasensignals ($S_I$) auf eine Basis, die gebildet ist durch ein erstes und ein zweites periodisches Signal, die zueinander orthogonal sind, um ein erstes bzw. ein zweites Projektionssignal ($S_{II}$, $S_{IQ}$) zu liefern, wobei die Projektion mit Hilfe einer zweiten Quadraturmischung (441, 442) und einer Integration (471, 472) auf einem Zeitfenster realisiert wird;
(c) Projektion des Quadratursignals ($S_Q$) auf eine Basis, um ein drittes bzw. ein viertes Projektionssignal ($S_{QI}$, $S_{QQ}$) zu liefern, wobei die Projektion mit Hilfe einer dritten Quadraturmischung (443, 444) und einer Integration (473,474) auf dem Zeitfenster realisiert wird;
**dadurch gekennzeichnet, dass** es umfasst:

eine Abschätzung der Phase des RF-Signals ($\varphi_{RF}(\tau)$) bezüglich des Signals des ersten Lokaloszillators sowie eine Abschätzung der Phase des Basisbandsignals ($\varphi_{BB}(\tau)$) bezüglich des ersten/zweiten periodischen Signals ausgehend vom ersten, zweiten, dritten und vierten Projektionssignal, wobei die Ankunftszeit $(\hat{\tau}_{RF}, \hat{\tau}_{BB})$ des Pulses ausgehend von den zwei derart abgeschätzten Phasen $(\hat{\varphi}_{RF}(\tau), \hat{\varphi}_{BB}(\tau))$ erhalten wird.

2. Verfahren zur Abschätzung der Ankunftszeit nach Anspruch 1, **dadurch gekennzeichnet, dass** das Erhalten der Ankunftszeit umfasst:

- eine erste Abschätzung der Ankunftszeit ausgehend von der derart abgeschätzten Phase des Basisbandsignals;
- eine zweite Abschätzung der Ankunftszeit ausgehend von der derart abgeschätzten Phase des RF-Signals, wobei diese zweite Abschätzung mit einer Mehrdeutigkeit erhalten wird, die bis auf ein ganzzahliges Vielfaches gleich der Halbperiode der Trägerfrequenz ist;
- einen Vergleich der ersten und der zweiten Abschätzung der Ankunftszeit, um auf Grundlage der zweiten Abschätzung eine mehrdeutigkeitsfreie Abschätzung der Ankunftszeit zu erhalten.

3. Verfahren zur Abschätzung der Ankunftszeit nach Anspruch 1 oder 2, **dadurch gekennzeichnet, dass** die Phase des RF-Signals abgeschätzt wird ausgehend von:

$$\hat{\varphi}_{RF} = Arc\tan\sqrt{\frac{s_{QI}^2 + s_{QQ}^2}{s_{IQ}^2 + s_{II}^2}}$$

wobei $S_{II}$, $S_{IQ}$, $S_{QI}$, $S_{QQ}$ das erste, zweite, dritte bzw. vierte Projektionssignal sind.

4. Verfahren zur Abschätzung der Ankunftszeit nach Anspruch 1 oder 2, **dadurch gekennzeichnet, dass** die Phase des RF-Signals abgeschätzt wird ausgehend von:

$$\hat{\varphi}_{RF} = \pi/2 - Arc\tan\sqrt{\frac{s_{IQ}^2 + s_{II}^2}{s_{QI}^2 + s_{QQ}^2}}$$

wobei $S_{II}$, $S_{IQ}$, $S_{QI}$, $S_{QQ}$ das erste, zweite, dritte bzw. vierte Projektionssignal sind.

5. Verfahren zur Abschätzung der Ankunftszeit nach einem der Ansprüche 1 bis 4, **dadurch gekennzeichnet, dass** die Phase des Basisbandsignals abgeschätzt wird mit Hilfe eines ersten Abschätzers:

$$\hat{\varphi}_{BB}^{3\&5} = \cos^2\left(\hat{\varphi}_{RF}\right) Arc\tan\left(\frac{s_{IQ}}{s_{II}}\right) + \sin^2\left(\hat{\varphi}_{RF}\right) Arc\tan\left(\frac{s_{QQ}}{s_{QI}}\right)$$

wenn sie nahe 0 (modulo $\pi$) ist, oder aber mit Hilfe eines zweiten Abschätzers:

$$\hat{\varphi}_{BB}^{4\&6} = \pi/2 - \cos^2\left(\hat{\varphi}_{RF}\right).Arc\tan\left(\frac{s_{II}}{s_{IQ}}\right) - \sin^2\left(\hat{\varphi}_{RF}\right) Arc\tan\left(\frac{s_{QI}}{s_{QQ}}\right)$$

wenn sie nahe $\pi/2$ (modulo $\pi$) ist;
wobei $\hat{\varphi}_{RF}$ die Abschätzung des RF-Signals ist, und $S_{II}$, $S_{IQ}$, $S_{QI}$, $S_{QQ}$ das erste, zweite, dritte bzw. vierte Projektionssignal sind.

6. Verfahren zur Abschätzung der Ankunftszeit nach Anspruch 5, **dadurch gekennzeichnet, dass** man zur Bestimmung, ob die Phase des Basisbandsignals nahe 0 bzw. $\pi/2$ (modulo $\pi$) ist, bestimmt, ob eine Abschätzung dieser Phase durch einen dritten Abschätzer:

$$\hat{\varphi}_{BB}^{1} = Arc\tan \sqrt{\frac{s_{IQ}^{2} + s_{QQ}^{2}}{s_{QI}^{2} + s_{II}^{2}}}$$

nahe 0 bzw. $\pi/2$ (modulo $\pi$) ist.

7. Verfahren zur Abschätzung der Ankunftszeit nach Anspruch 5, **dadurch gekennzeichnet, dass** man zur Bestimmung, ob die Phase des Basisbandsignals nahe 0 bzw. $\pi/2$ (modulo $\pi$) ist, bestimmt, ob eine Abschätzung dieser Phase durch einen vierten Abschätzer:

$$\hat{\varphi}_{BB}^{2} = \pi/2 - Arc\tan \sqrt{\frac{s_{QI}^{2} + s_{II}^{2}}{s_{IQ}^{2} + s_{QQ}^{2}}}$$

nahe 0 bzw. $\pi/2$ (modulo $\pi$) ist.

8. Verfahren zur Abschätzung der Ankunftszeit nach Anspruch 1 oder 2, **dadurch gekennzeichnet, dass** die Phase des Basisbandsignals abgeschätzt wird ausgehend von:

$$\hat{\varphi}_{BB} = Arc\tan \sqrt{\frac{s_{IQ}^{2} + s_{QQ}^{2}}{s_{QI}^{2} + s_{II}^{2}}}$$

wobei $S_{II}$, $S_{IQ}$, $S_{QI}$, $S_{QQ}$ das erste, zweite, dritte bzw. vierte Projektionssignal sind.

9. Verfahren zur Abschätzung der Ankunftszeit nach Anspruch 1 oder 2, **dadurch gekennzeichnet, dass** die Phase des Basisbandsignals abgeschätzt wird ausgehend von:

$$\hat{\varphi}_{BB} = \pi/2 - Arc\tan \sqrt{\frac{s_{QI}^{2} + s_{II}^{2}}{s_{IQ}^{2} + s_{QQ}^{2}}}$$

wobei $S_{II}$, $S_{IQ}$, $S_{QI}$, $S_{QQ}$ das erste, zweite, dritte bzw. vierte Projektionssignal sind.

10. Verfahren zur Abschätzung der Ankunftszeit nach Anspruch 8 oder 9, **dadurch gekennzeichnet, dass** die Phase des RF-Signals abgeschätzt wird mit Hilfe eines ersten Abschätzers:

$$\hat{\varphi}_{RF}^{3\&5} = \cos^{2}\left(\hat{\varphi}_{BB}\right) Arc\tan\left(\frac{s_{QI}}{s_{II}}\right) + \sin^{2}\left(\hat{\varphi}_{BB}\right) Arc\tan\left(\frac{s_{QQ}}{s_{IQ}}\right)$$

wenn sie nahe 0 (modulo $\pi$) ist, oder aber mit Hilfe eines zweiten Abschätzers:

$$\hat{\varphi}_{RF}^{4\&6} = \pi/2 - \cos^2\left(\hat{\varphi}_{BB}\right) Arc\tan\left(\frac{S_{II}}{S_{QI}}\right) - \sin^2\left(\hat{\varphi}_{BB}\right) Arc\tan\left(\frac{S_{IQ}}{S_{QQ}}\right)$$

wenn sie nahe $\pi/2$ (modulo $\pi$) ist;
wobei $\hat{\varphi}_{BB}$ die Abschätzung des Basisbandsignals ist, und $S_{II}$, $S_{IQ}$, $S_{QI}$, $S_{QQ}$ das erste, zweite, dritte bzw. vierte Projektionssignal sind.

11. Verfahren zur Abschätzung der Ankunftszeit nach Anspruch 10, **dadurch gekennzeichnet, dass** man zur Bestimmung, ob die Phase des RF-Signals nahe 0 bzw. $\pi/2$ (modulo $\pi$) ist, bestimmt, ob eine Abschätzung dieser Phase durch einen dritten Abschätzer:

$$\hat{\varphi}_{RF}^{1} = Arc\tan\sqrt{\frac{S_{QI}^2 + S_{QQ}^2}{S_{IQ}^2 + S_{II}^2}}$$

nahe 0 bzw. $\pi/2$ (modulo $\pi$) ist.

12. Verfahren zur Abschätzung der Ankunftszeit nach Anspruch 10, **dadurch gekennzeichnet, dass** man zur Bestimmung, ob die Phase des RF-Signals nahe 0 bzw. $\pi/2$ (modulo $\pi$) ist, bestimmt, ob eine Abschätzung dieser Phase durch einen vierten Abschätzer:

$$\hat{\varphi}_{RF}^{2} = \pi/2 - Arc\tan\sqrt{\frac{S_{IQ}^2 + S_{II}^2}{S_{QI}^2 + S_{QQ}^2}}$$

nahe 0 bzw. $\pi/2$ (modulo $\pi$) ist.

13. Verfahren zur Abschätzung der Ankunftszeit nach einem der vorhergehenden Ansprüche, **dadurch gekennzeichnet, dass** eine erste Abschätzung der Ankunftszeit $\hat{\tau}_{BB}$ des UWB Pulses erhalten wird ausgehend von:

$$\hat{\tau}_{BB} = \tau_{window} + \Delta T \frac{\hat{\varphi}_{BB}}{2\pi}$$

wobei $\tau_{window}$ der Anfang des Zeitfensters ist, $\Delta T$ die Dauer des Zeitfensters ist, und $\hat{\varphi}_{BB}$ die Abschätzung der Phase des Basisbandsignals ist.

14. Verfahren zur Abschätzung der Ankunftszeit nach einem der vorhergehenden Ansprüche, **dadurch gekennzeichnet, dass** eine zweite Abschätzung der Ankunftszeit $\hat{\tau}_{RF}$ des UWB-Pulses erhalten wird ausgehend von:

$$\hat{\tau}_{RF} = \tau_{window} + T_0 . \frac{\hat{\varphi}_{RF} - \gamma}{2\pi} + k\frac{T_0}{2}$$

wobei $\tau_{window}$ der Anfang des Zeitfensters ist, $T_0$ eine Periode der Trägerfrequenz ist, $\hat{\varphi}_{RF}$ die Abschätzung der Phase des RF-Signals ist, $k$ eine positive oder negative ganze Zahl oder 0 ist, und $\gamma$ eine durch Kalibration erhaltene Phasenverschiebung ist.

**15.** Verfahren zur Abschätzung der Ankunftszeit nach den Ansprüchen 13 und 14, **dadurch gekennzeichnet, dass** die ganze Zahl derart bestimmt wird, dass der Absolutwert des Abstands zwischen der ersten und der zweiten Abschätzung der Ankunftszeit minimiert wird.

**Claims**

**1.** Method of estimating the time of arrival of a UWB pulse contained in an RF signal, said UWB pulse being modulated at a carrier frequency ($f_0$) :

(a) reception of the RF signal and translation of the signal thus received in baseband using a first mix in quadrature (421,422) to provide a signal in phase ($S_I$) and a signal in quadrature ($\boldsymbol{S_Q}$) with the signal of a first local oscillator (420), said signals in phase and in quadrature forming a baseband signal;
(b) projection of the signal in phase ($\boldsymbol{S_I}$) onto a base composed of first and second periodic signals orthogonal to each other, to provide first and second projection signals respectively ($\boldsymbol{S_{II}},\boldsymbol{S_{IQ}}$), said projection being made by means of a second mix in quadrature (441, 442) and an integration (471, 472) on a time window;
(c) projection of the signal in quadrature ($\boldsymbol{S_Q}$) onto said base, to provide third and fourth projection signals respectively ($\boldsymbol{S_{QI}},\boldsymbol{S_{QQ}}$), said projection being done by means of a third mix in quadrature (443, 444) and an integration (473, 474) on said time window;
**characterised in that** it comprises:

an estimate of the phase of the RF signal ($\varphi_{RF}(\tau)$) relative to the signal of the first local oscillator and an estimate of the phase of the baseband signal ($\varphi_{BB}(\tau)$) relative to the first/second periodic signal, starting from the first, second, third and fourth projection signals, the time of arrival ($\hat{\tau}_{RF},\hat{\tau}_{BB}$) of said pulse being obtained from the two phases thus estimated ($\hat{\varphi}_{RF}(\tau),\hat{\varphi}_{BB}(\tau)$).

**2.** Method of estimating the time of arrival according to claim 1, **characterised in that** the time of arrival is obtained by means of:

- a first estimate of the time of arrival starting from the phase of the baseband signal thus estimated;
- a second estimate of the time of arrival starting from the phase of the RF signal thus estimated, this second estimate being obtained with an ambiguity equal to an integer multiple approximately equal to the half-period of the carrier frequency;
- a comparison between the first and second time of arrival estimates to obtain an unambiguous estimate of the time of arrival, based on said second estimate.

**3.** Method of estimating the time of arrival according to claim 1 or 2, **characterised in that** the phase of the RF signal is estimated from:

$$\hat{\varphi}_{RF} = Arc\tan\sqrt{\frac{s_{QI}^2 + s_{QQ}^2}{s_{IQ}^2 + s_{II}^2}}$$

where $\boldsymbol{S_{II}},\boldsymbol{S_{IQ}},\boldsymbol{S_{QI}},\boldsymbol{S_{QQ}}$ are the first, second, third and fourth projection signals respectively.

**4.** Method of estimating the time of arrival according to claim 1 or 2, **characterised in that** the phase of the RF signal is estimated from:

$$\hat{\varphi}_{RF} = \pi/2 - Arc\tan\sqrt{\frac{s_{IQ}^2 + s_{II}^2}{s_{QI}^2 + s_{QQ}^2}}$$

where $S_{II}, S_{IQ}, S_{QI}, S_{QQ}$ are the first, second, third and fourth projection signals respectively.

5. Method of estimating the time of arrival according to one of claims 1 to 4, **characterised in that** the phase of the baseband signal is estimated using a first estimator:

$$\hat{\varphi}_{BB}^{3\&5} = \cos^2\left(\hat{\varphi}_{RF}\right) Arc\tan\left(\frac{S_{IQ}}{S_{II}}\right) + \sin^2\left(\hat{\varphi}_{RF}\right) Arc\tan\left(\frac{S_{QQ}}{S_{QI}}\right)$$

if it is close to 0 (modulo $\pi$) or using a second estimator:

$$\hat{\varphi}_{BB}^{4\&6} = \pi/2 - \cos^2\left(\hat{\varphi}_{RF}\right). Arc\tan\left(\frac{S_{II}}{S_{IQ}}\right) - \sin^2\left(\hat{\varphi}_{RF}\right) Arc\tan\left(\frac{S_{QI}}{S_{QQ}}\right)$$

if it is close to $\pi/2$ (modulo $\pi$);
$\hat{\varphi}_{RF}$ being said estimate of the RF signal and $S_{II}, S_{IQ}, S_{QI}, S_{QQ}$ being the first, second, third and fourth projection signals respectively.

6. Method of estimating the time of arrival according to claim 5, **characterised in that** it is determined if the phase of the baseband signal is close to 0 (or $\pi/2$ (modulo $\pi$) ), by determining if an estimate of this phase using a third estimator:

$$\hat{\varphi}_{BB}^{1} = Arc\tan\sqrt{\frac{s_{IQ}^2 + s_{QQ}^2}{s_{QI}^2 + s_{II}^2}}$$

is close to 0 (or $\pi/2$ (modulo $\pi$)) respectively.

7. Method of estimating the time of arrival according to claim 5, **characterised in that** it is determined if the phase of the baseband signal is close to 0 (or $\pi/2$ (modulo $\pi$ ), by determining if an estimate of this phase by a fourth estimator:

$$\hat{\varphi}_{BB}^{2} = \pi/2 - Arc\tan\sqrt{\frac{s_{QI}^2 + s_{II}^2}{s_{IQ}^2 + s_{QQ}^2}}$$

is close to 0 (or $\pi/2$ (modulo $\pi$)) respectively.

8. Method of estimating the time of arrival according to claim 1 or 2, **characterised in that** the phase of the baseband signal is estimated from:

$$\hat{\varphi}_{BB} = Arc\tan\sqrt{\frac{s_{IQ}^2 + s_{QQ}^2}{s_{QI}^2 + s_{II}^2}}$$

where $S_{II}, S_{IQ}, S_{QI}, S_{QQ}$ are the first, second, third and fourth projection signals respectively.

9. Method of estimating the time of arrival according to claim 1 or 2, **characterised in that** the phase of the baseband signal is estimated from:

$$\hat{\varphi}_{BB} = \pi/2 - Arc\tan\sqrt{\frac{s_{QI}^2 + s_{II}^2}{s_{IQ}^2 + s_{QQ}^2}}$$

where $S_{II}, S_{IQ}, S_{QI}, S_{QQ}$ are the first, second, third and fourth projection signals respectively.

10. Method of estimating the time of arrival according to claim 8 or 9, **characterised in that** the phase of the RF signal is estimated by means of a first estimator:

$$\hat{\varphi}_{RF}^{3\&5} = \cos^2\left(\hat{\varphi}_{BB}\right) Arc\tan\left(\frac{s_{QI}}{s_{II}}\right) + \sin^2\left(\hat{\varphi}_{BB}\right) Arc\tan\left(\frac{s_{QQ}}{s_{IQ}}\right)$$

if it is close to 0 (modulo $\pi$) or by means of a second estimator:

$$\hat{\varphi}_{RF}^{4\&6} = \pi/2 - \cos^2\left(\hat{\varphi}_{BB}\right) Arc\tan\left(\frac{s_{II}}{s_{QI}}\right) - \sin^2\left(\hat{\varphi}_{BB}\right) Arc\tan\left(\frac{s_{IQ}}{s_{QQ}}\right)$$

if it is close to $\pi/2$ (modulo $\pi$);
$\hat{\varphi}_{BB}$ being said estimate of the baseband signal and $S_{II}, S_{IQ}, S_{QI}, S_{QQ}$ being the first, second, third and fourth projection signals respectively.

11. Method of estimating the time of arrival according to claim 10, **characterised in that** it is determined if the phase of the RF signal is close to 0 (or $\pi/2$ (modulo $\pi$)), by determining if an estimate of this phase by a third estimator:

$$\hat{\varphi}_{RF}^1 = Arc\tan\sqrt{\frac{s_{QI}^2 + s_{QQ}^2}{s_{IQ}^2 + s_{II}^2}}$$

is close to 0 (or $\pi/2$ (modulo $\pi$)) respectively.

12. Method of estimating the time of arrival according to claim 10, **characterised in that** it is determined if the phase of the RF signal is close to 0 (or $\pi/2$ (modulo $\pi$)), by determining if an estimate of this phase by a fourth estimator:

$$\hat{\varphi}_{RF}^2 = \pi/2 - Arc\tan\sqrt{\frac{s_{IQ}^2 + s_{II}^2}{s_{QI}^2 + s_{QQ}^2}}$$

is close to 0 (or $\pi/2$ (modulo $\pi$)) respectively.

13. Method of estimating the time of arrival according to one of the previous claims, **characterised in that** the first estimate of the time of arrival $\hat{\tau}_{BB}$ of the UWB pulse is obtained from:

$$\hat{\tau}_{BB} = \tau_{window} + \Delta T \cdot \frac{\hat{\varphi}_{BB}}{2\pi}$$

where $\tau_{window}$ is the beginning of said time window, $\Delta T$ is the duration of said time window and $\hat{\varphi}_{BB}$ is said estimate of the phase of the baseband signal.

14. Method of estimating the time of arrival according to one of the previous claims, **characterised in that** the second estimate of the time of arrival $\hat{\tau}_{RF}$ of the UWB pulse is obtained from:

$$\hat{\tau}_{RF} = \tau_{window} + T_0 \cdot \frac{\hat{\varphi}_{RF} - \gamma}{2\pi} + k \frac{T_0}{2}$$

where $\tau_{window}$ is the beginning of said time window, $T_0$ is a period of the carrier frequency, $\hat{\varphi}_{RF}$ is said estimate of the phase of the RF signal, k is a positive, negative or zero integer, and $\gamma$ is a phase shift obtained by calibration.

15. Method of estimating the time of arrival according to claims 13 and 14, **characterised in that** said integer is determined to minimise the absolute value of the difference between the first and second estimates of the time of arrival.

**Fig. 1**

**Fig. 2**

**Fig. 3**

**Fig. 4**

**Fig. 5**

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1580901 A

- US 7227346 B

**Littérature non-brevet citée dans la description**

- **G. MASSON et al.** A 1 nJ/b 3.2 to 4.7 GHz UWB 50 Mpulses/s double quadrature receiver for communication and localization. *Proc. of the ESSCIRC,* 14 Septembre 2010, 502-505

- **F. BAUTISTA et al.** Low power beamforming RF architecture enabling fine ranging and AOA techniques. *Proc. of 2011 IEEE Int'l Conf. on Ultra-Wideband,* 585-589